# EUROPEAN PATENT SPECIFICATION

(11) **EP 1 514 480 B1**
(45) Date of publication and mention of the grant of the patent: **14.11.2007**
(21) Application number: 04021041.1
(22) Date of filing: 03.09.2004
(51) Int. Cl.: A23K 1/18

(54) **Pet food**
Tierfutter
Aliment pour animaux

(30) Priority: 05.09.2003 JP 2003314812
(43) Date of publication of application: 16.03.2005
(73) Proprietor: KAO CORPORATION, Tokyo 103-8210 (JP)
(72) Inventor: Umeda, Tomoshige, Sumida-ku Tokyo 131-8501 (JP); Ooshima, Akira, Sumida-ku Tokyo 131-8501 (JP); Suzuki, Junko, Haga-gun Tochigi 321-3497 (JP); Shimotoyodome, Akira, Haga-gun Tochigi 321-3497 (JP)
(74) Representative: HOFFMANN EITLE

(56) References cited:
- EP-A- 0 480 433
- US-A- 4 044 158
- US-B1- 6 455 083
- PATENT ABSTRACTS OF JAPAN vol. 1999, no. 01, 29 January 1999 (1999-01-29) & JP 10 279487 A (NIPPON SHOKUHIN KAKO CO LTD; SANWA DENPUN KOGYO KK), 20 October 1998 (1998-10-20)

## Description

### Field of the Invention

The present invention relates to a pet food capable of for example, presenting obesity and suppressing weight increase.

### Background of the Invention

The number of pet animals is on the rise with the growing popularity of having pets. Pets suffering from so-called lifestyle related diseases, such as obesity, diabetes and liver disease, are increasing owing to aging, insufficient exercise, intake of excess nutrition and the like, as human beings. In addition, many dogs and cats grow obese because of the hormone imbalance attributable to contraceptive surgery.

A great number of pet foods have been developed with the aim of preventing such obesity or overweightness. For example, there are pet foods known to contain an extract of laurel leaves as an amylase inhibitor (Japanese Patent Publication No. Hei 05-192092), a lipase inhibitor such as hesperidin (Japanese Patent Publication No. Hei 09-187230), and *Grifola Frondosa* (hen of woods) powder and/or extract (Japanese Patent Publication No. Hei 08-38069). Also, a technology aimed at improving lipid metabolism by a grain having a high content of amylose is disclosed (Japanese Patent Publication No. Hei 10-278487), though its application is not limited to pet foods.

US 4, 044, 158 discloses a pet food which may contain high amylose corn starch together with beef tripe, soy protein isolate and animal fat.

EP 0 480 433 A2 describes food containing high amylose starch, such as canned pet foods.

US 6,455,083 B1 describes a nutritious pet chew containing a mixture of plant and animal derived protein and starch, such as high amylose starch.

### Summary of the Invention

The present invention provides a pet food containing a carbonhydrate that includes a high-amylose starch an animal and/or vegetable protein, and an oil or fat containing a diacylglycerol in an amount of 3 weight % or more with respect to the total amount of the oil or fat.

### Brief Description of the Drawings

FIG. 1 is a graph showing the weight of a mouse fed with a test pet food containing a test-starch (5 mass%) for 23 weeks;
FIG. 2 illustrates changes in the weight of a dog fed with a test pet food for 5 weeks;
FIG. 3 illustrates a sensory evaluation of the feres, skin and coat of a dog fed with the test pet food for 5 weeks.

### Detailed Description of the Invention

Special substances contained in the conventional pet foods sometimes cause problems in pets such as loss of appetite and change in the odor of feces. A pet food containing amylose in a high concentration tends to become loose feces and inconvenient to dispose owing to the amylose's poor digestibility.

The present invention provides a pet food which has benefits such as excellent anti-obesity effects, does not lower a pet's appetite and has no influence on the condition of feces.

The present inventors carried out an investigation with a view toward obtaining a pet food having an anti-obesity effect without using a chemically synthesized product or special substance. As a result, it has been found that by using a high-amylose starch and an animal or vegetable protein alone or in combination, a pet food having benefits such as an excellent anti-obesity effect without lowering the pet's appetite can be obtained.

The pet food of the present invention has benefits such as excellent preventive effects on obesity and suppressing effects on the weight-increase of pets. In addition, pets consuming the preferred pet food of the present invention has a good apetite and thus there is substantially no risk to a pet's nutrition balance. Moreover, there is substantially no difference in the condition of the feces of pets, such as odor, between the preferred pet food of the present invention and conventional ones.

The preferred high-amylose starch to be used for the pet food of the present invention is a starch having an amylose content of from 40 to 99 weight%. Preferred examples thereof include high-amylose corn starch, "Glacier AC38" which is six-rows barley, and su2 corn. Examples of commercially available products include high-amylose corn starches such as "High amylose corn starch amylomaize V" (having an amylose content of from 50 to 60 weight%), "Amylomaize VI" (having an amylose content of from 60 to 70 weight%), "Amylomaize VII" (having an amylose content of from 70 to 80 weight%), each of which is a product of Nihon Shokuhin Kako, and "Fibose" (having an amylose content of about 70 weight%), product of Nippon Starch Chemical Co., LTD.

From the viewpoints of economy, anti-obesity effect, taste preference, and the condition of feces, the high-amylose starch preferably makes up 3 weight% or more, more preferably from 3 to 30 weight%, even more preferably from 3 to 20 weight% of the total amount of the carbohydrate.

Examples of the carbohydrate other than high-amylose starch include monosaccharides, oligosaccharides, polysaccharides, food fibers and starches. Examples of the starch include corn starch, wheat starch, rice starch, potato starch, sweet potato starch and tapioca starch. The carbohydrate may be incorporated as a grain, examples of which include wheat, barley, rye, MICA, corn, rice, foxtail millet, Japanese millet, amaranthus, and quinua. The carbohydrate is preferably added to the pet food in an amount of from 10 to 70 weight%, more preferably from 20 to 60 weight%, even more preferably from 30 to 50 weight%, by weighs of the pet food.

As the animal protein to be preferably added to the pet food of the present invention, milk proteins such as casein can be given as an example. From the viewpoints of anti-cbesity effect and taste preference, proteins of animal meats are preferred, however. Examples of animal meat include meats of livestock or of wild animals such as cows, pigs, sheep, rabbits and kangaroos, and by-products or processed foods thereof; meats of poultry such as chickens, turkeys and quails, and by-products or processed foods thereof; fish meat including white fish, and by-products or processed foods thereof; and renderings of the above-described raw materials such as meat meal, meat bone meal, chicken meal and fish meal. Of these, chicken and fish meat are preferred for the prevention of obesity. When a plurality of meat proteins are mixed, chicken and/fish meat is (are) preferably incorporated in an amount of from 30 to 100 weight%, preferably from 50 to 100 weight% based on the total amount of the meat proteins.

As the vegetable protein, soybean protein, wheat protein, wheat gluten, corn gluten and the like are preferred.

The animal or vegetable protein is preferably added to the pet food of the present invention in an amount of from 5 to 70 weight%, more preferably from 10 to 60 weight%, even more preferably from 15 to 40 weight% in terms of dry weight.

In addition to the above-described components, an oil or fat containing a diacylglycerol added to the pet food of the present invention. The oil or fat containing a diacylglycerol shows a preventive effect on obesity. The pet food of the present invention having, in addition to the carbohydrate containing high-amylose starch and the animal or vegetable protein, a diacylglycerol-containing oil or fat has a good nutrition balance, because it has a markedly improved anti-obesity effect while enhancing a pet's food intake.

The diacylglycerol of the present invention is a diacylglycerol that is contained in a natural oil or fat having, in constituent fatty acids thereof, a saturated or unsaturated C₁₄₋₂₂ fatty acid, for example, safflower oil, olive oil, cotton seed oil, corn oil, rapeseed oil, soybean Oil, palm oil, sunflower oil, linseed oil, sesame oil, lard, beef tallow, fish oil or milk fat or fractionated oil thereof. In order to adjust the content of diacylglycerol, natural oil or fat, such as safflower oil, olive oil, cotton seed oil, corn oil, rapeseed oil, soybean oil, sunflower oil, linseed oil, sesame oil, lard, beef tallow, fish oil, and milk fat, or randomized oil, hydrogenated oil or ester exchange oil thereof and glycerin may be subjected to ester exchange in the presence of a hydroxide of an alkali metal or an alkaline earth metal; or a fatty acid mixture derived from the above-described oil or fat and glycerin may be esterified. Two or more kinds of the oil or fat may be mixed.

Although the above-described reaction may be carried out by a chemical reaction using such an alkali catalyst as described above, a reaction carried out under mild conditions using an enzyme such as 1,3-selective lipase is preferred in consideration of oxidation stability and taste preference.

The preferred pet food of the present invention contains oil or fat preferably in an amount of from 1 to 50 weight%, more preferably from 3 to 40 weight%, even more preferably from 5 to 30 weight% in consideration of anti-obesity effects and a pet's food intake. The oil or fat contains diacylglycerol preferably in an amount of 3 weight% or more, more preferably from 8 to 90 weight%, even more preferably from 8 to 60 weight% , still more preferably from 12 to 60 from the viewpoint of anti-obesity effects.

The pet food of the present invention may further contain a phytosterol. It is added to the pet food preferably in an amount of 0.1 wt.% or greater, more preferably 0.5 wt.% or greater with an aim to lower the cholesterol level. The upper limit of the phytosterol content may be as high as 30 wt.%. Examples of the phytosterol include phytosterols in the free form such as α-sitosterol, β-sitosterol, stigmasterol, campesterol, α-sitostanol, β-sitostanol, stigmastanol, campestanol and cyloartenol; and phytosterols in the ester form such as fatty acid esters, ferulate esters, and cinnamate esters of the above-described phytosterols.

To the pet food of the present invention, brans, lees, vegetables, vitamins and minerals may be added further. Brans include rice bran, wheat bran and the like, while lees include soybean lee and the like. Vegetables include vegetable extracts and the like. The vitamins are preferably contained in a range of 0.05 to 10 weight%, and examples of such include A, B₁, B₂, D, E, niacin, pantothenic acid, carotene and the like. The minerals are contained in a range of 0.05 to 10 weight%, and examples of such include calcium, phosphorus, sodium, potassium, iron and the like. In addition, the pet food of the present invention may contain additives ordinarily employed for pet foods such as gelling agent, shape retainer, pH regulator, seasoning, antiseptic and nutritional supplement. During preparation, heating while purging with an inert gas such as nitrogen or deaerating is effective and is therefore preferred for preventing oxidation of the oil or fat.

### Examples

The following examples further describe and demonstrate embodiments of the present invention. The examples are given solely for the purpose of illustration and are not to be construed as limitations of the present invention.

### Example 1 (Reference Example)

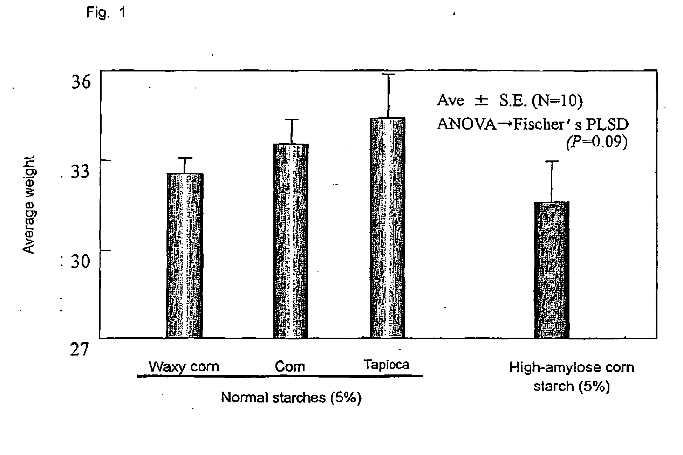

The weight change of C57BL/6J mice (model animal of diet-dependent obesity·diabetes) fed ad *libitum* for 24 weeks with a test food having the composition as shown in Table 1 was measured. Weight changes shown in FIG. 1 are those when high-amylose corn starch ("Fibose"), waxy corn, corn and tapioca starch were used as the test starch, respectively.

**[Table 1]**

| Materials for pet food | Amount added (weight%) |
|---|---|
| α-Potato starch*¹ | 23.5 |
| Test starch | 5 |
| Sucrose | 13 |
| Corn oil*¹ | 30 |
| Casein *¹ | 20 |
| Cellulose powder *¹ | 4 |
| Mineral mixture *¹ | 3.5 |
| Vitamin mixture *¹ | 1 |

| | |
|---|---|
| *1: product of Oriental Yeast Co., Ltd. | |

As illustrated in FIG. 1, the pet food obtained by adding 5 weight% (12 weight% of total carbohydrate) of high-amylose starch to the animal protein considerably suppressed weight increase compared with the pet food containing ordinary starches.

### Examples 2 to 4

The pet foods were prepared in accordance with the formulation as shown in Table 2.

**[Table 2]**

| Materials for pet food | Amount added (weight%) | | |
|---|---|---|---|
| | Example 2*⁴ | Example 3 | Example 4 |
| Chicken (skinless chicken breast) | 60.5 | 60.5 | 60.5 |
| Amylomaize VI | 25 | 25 | 5 |
| Waxy com starch | - | - | 20 |
| Oil or fat *² | 10 | - | - |
| High-diacylglycerol oil or fat *³ | - | 10 | 10 |
| Mineral mixture for dogs | 3.5 | 3.5 | 3.5 |
| Vitamin mixture for dogs | 1 | 1 | 1 |

| | | | |
|---|---|---|---|
| *2: Fatty acid composition (weight%) in glyceride C16 5.3%, C18 2.1%, C18:1 32.7%, C18:2 47.0%, C18:3 6.8%. Glyceride composition (weight%) Free fatty acid 3.2%, monoacylglycerol 1.9%, diacylglycerol 4.6%, triacylglycerol 90.2% *3: Fatty acid composition (weight%) in glyceride C16 3.0%, C18 1.1%, C18:1 36.4%, C18:2 44.9%, C18:3 5.1%. Glyceride composition (weight%) Free fatty acid 1.4%, moncacylglycerol 3.1%, diacylglycerol 64.0%, triacylglycerol 10.9% *4 Reference Example | | | |

The pet food prepared in Examples 2 to 4 have excellent effects for suppressing weight increase and do not impair the pets' appetite. In addition, feces of the pets fed with the pet food emit no abnormal odor. Examples 5 and 6, and Comparative Example 1

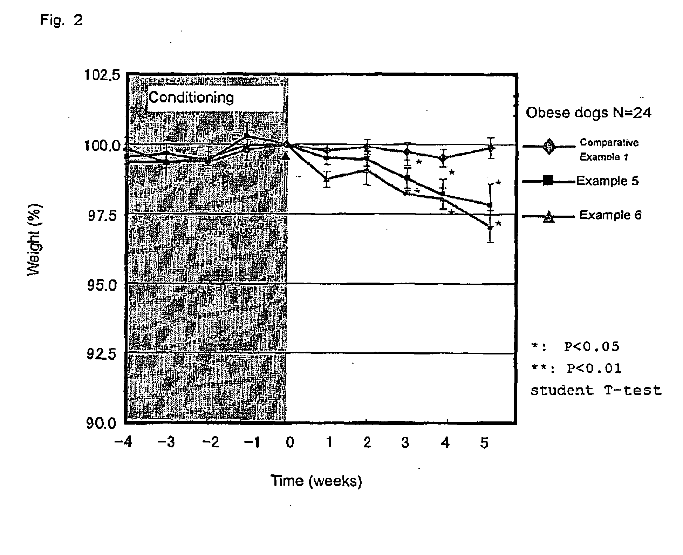

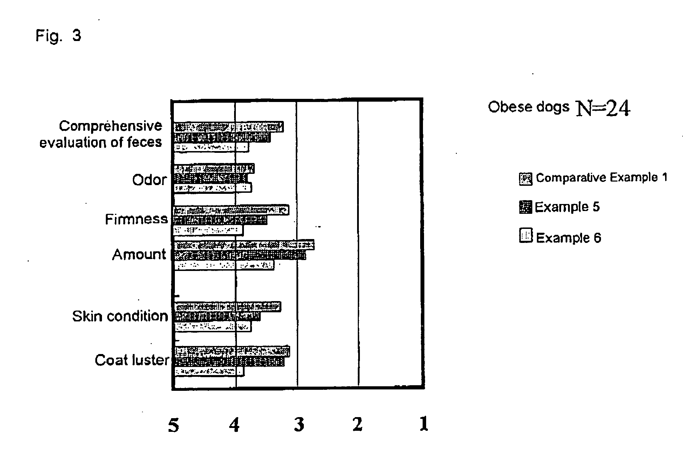

Pet food was prepared in accordance with the formulation shown in Table 3. Oil or fat was extracted from the pet food thus prepared, and the composition thereof was analized (Table 4). Twenty-four obese dogs were divided into 3 groups with no intentional selection depending on their weight, obesity and age, and a feeding test was carried out using the pet food. After conditioning for 4 weeks, the dogs were divided into 3 groups and fed with the pet food assigned for each group for 5 weeks. The weight change, and the conditions of feces and skin, and coat luster were evaluated in accordance with the below-described criteria. The results are shown in FIGS. 2 and 3.

An ordinary condition is scored as a "3" in each evaluation. The condition of feces was comprehensively evaluated in terms of the average score for odor, firmness and amount.

### [Condition of feces]

Odor

| | |
|---|---|
| 5: | very weak |
| 4: | weak |
| 3: | no change |
| 2: | intense |
| 1: | very intense |

Firmness

| | |
|---|---|
| 5: | Very firm |
| 4: | Firm |
| 3: | No change |
| 2: | Soft |
| 1: | Very soft |

Amount

| | |
|---|---|
| 5: | Very little |
| 4: | Little |
| 3: | No change |
| 2: | Large |
| 1: | Very large |

[Comprehensive revaluation of feces, Skin condition, and Coat condition]

| | |
|---|---|
| 5: | Excellent |
| 4: | Good |
| 3: | No change |
| 2: | Poor |
| 1: | Very poor |

**[Table 3]**

| | Comparative Example 1 | Example 5** | Example 6 |
|---|---|---|---|
| Chicken | 3.0 | 3.0 | 3.0 |
| Chicken meal | 18.0 | 18.0 | 18.0 |
| Corn aluten meal | 15.0 | 15.0 | 15.0 |
| Barley | 18.0 | 18.0 | 18.0 |
| Corn | 17.2 | 17.2 | 17.2 |
| Sorghum | 14.0 | 9.5 | 9.5 |
| High-diacylglycerol oil or fat | 0.0 | 0.0 | 7.0 |
| Oil or fat | 7.0 | 7.0 | 0.0 |
| Chicken oil | 2.5 | 2.5 | 2.5 |
| Beet pulp | 5.0 | 5.0 | 5.0 |
| Vitamin mineral mixture | 0.3 | 0.3 | 0.3 |
| Amylomaize VI (% in carbohydrate) | 0.0 (0.0%) | 4.5 (10.0%) | 4.5 (10,0%) |
| Crude protein | 26.5 | 25.9 | 25.8 |
| Crude fat | 14.4 | 14.2 | 14.1 |
| Nitrogen Free Extract (carbohydrate) | 43.7 | 44.6 | 45.0 |
| Metabolic calorie | 3575 | 3675 | 3677 |

| | | | |
|---|---|---|---|
| * The oil or fat and the high-diacylglycerol oil or fat described in this table are the same as those described in Table 2. ** Reference Example | | | |

**[Table 4]**

| | Comparative Example 1 | Example 5 | Example 6 |
|---|---|---|---|
| TAG | 96.7 | 97.0 | 61.0 |
| DAG | 2.6 | 2.3 | 38.4 |
| MAG | 0.7 | 0.7 | 0.6 |

The pet food obtained in Examples 5 and 6 had an excellent effect for suppressing weight increase, and did not impair the appetite of the dogs. In addition, conditions of the feces of the dogs fed with these pet foods were good, especially in firmness.

## Claims

1. A pet food comprising a carbohydrate containing a high-amylose starch, an animal and/or vegetable protein, and an oil or fat containing a diacylglycerol in an amount of 3 weight % or more with respect to the total amount of the oil or fat.

2. The pet food of claim 1, wherein the protein is an animal and vegetable protein.

3. The pet food of claim 1 or 2, wherein the animal protein is an animal meat protein.

4. The pet food of claims 1 to 3, wherein the high-amylose starch makes up 3 weight % or more of the total amount of carbohaydrate.

## Patentansprüche

1. Tierfutter, umfassend ein Kohlenhydrat, umfassend eine Stärke mit hohem Amylosegehalt, ein tierisches und/oder pflanzliches Protein und ein Öl oder Fett, umfassend ein Diacylglycerin in einer Menge von 3 Gew.% oder mehr im Hinblick auf die Gesamtmenge des Öls oder Fetts.

2. Tierfutter nach Anspruch 1, worin das Protein ein tierisches und pflanzliches Protein ist.

3. Tierfutter nach Anspruch 1 oder 2, worin das Tierprotein ein tierisches Fleischprotein ist.

4. Tierfutter nach den Ansprüchen 1 bis 3, worin die Stärke mit hohem Amylosegehalt 3 Gew.% oder mehr der Gesamtmenge des Kohlenhydrats ausmacht.

## Revendications

1. Aliment pour animaux comprenant un hydrate de carbone contenant un amidon à haute teneur en amylose, une protéine animale et/ou végétale, et une huile ou une graisse contenant un diacylglycérol en une quantité de 3 % en poids ou plus par rapport à la quantité totale de l'huile ou de la graisse.

2. Aliment pour animaux selon la revendication 1, dans laquelle la protéine est une protéine animale et végétale.

3. Aliment pour animaux selon la revendication 1 ou 2, dans laquelle la protéine est une protéine de viande animale.

4. Aliment pour animaux selon la revendication 1 à 3, dans laquelle l'amidon à haute teneur en amylose est présent à raison de 3 % en poids ou plus par rapport à la quantité totale d'hydrate de carbone.
